# EUROPEAN PATENT SPECIFICATION

(11) **EP 0 956 766 B1**
(45) Date of publication and mention of the grant of the patent: **22.03.2000**
(21) Application number: 98870119.9
(22) Date of filing: 26.05.1998
(51) Int. Cl.: A01K 45/00, B65G 47/04

(54) **Method and apparatus for unloading crates from a container onto a transfer conveyor**
Verfahren und Vorrichtung zum Entladen von Kästen aus einem Behälter auf einen Überführungsförderer
Procédé et dispositif pour décharger des caisses d'un containeur sur un convoyeur de transfer

(43) Date of publication of application: 17.11.1999
(73) Proprietor: Vanhaecke, Hubert, 8630 Veurne (BE)
(72) Inventor: Vanhaecke, Hubert, 8630 Veurne (BE)
(74) Representative: Bird, William Edward

(56) References cited:
- EP-A- 0 005 755
- EP-A- 0 019 891
- EP-A- 0 061 869
- WO-A-94/27425
- US-A- 3 718 118
- US-A- 3 797 460
- US-A- 3 916 835
- US-A- 4 008 690

## Description

The present invention relates to a method and a system for unloading crates, particularly open-top crates including inanimate or animate objects such as livestock including poultry such as chickens, from a container. Typically the crates will be unloaded onto a conveyor. In a further step, livestock may be unloaded from the crates before being processed, for example, before slaughter in a slaughterhouse.

### TECHNICAL BACKGROUND

It is known to transport livestock such as poultry in containers from the farms where they are reared to processing plants such as slaughterhouses. As disclosed in US 3,797,460 these containers may have columns and rows of compartments whereby each compartment is closed off by a gate. The chickens in the compartments are unloaded by releasing the gates and tipping the container thus allowing the chickens to slide out of the compartments.

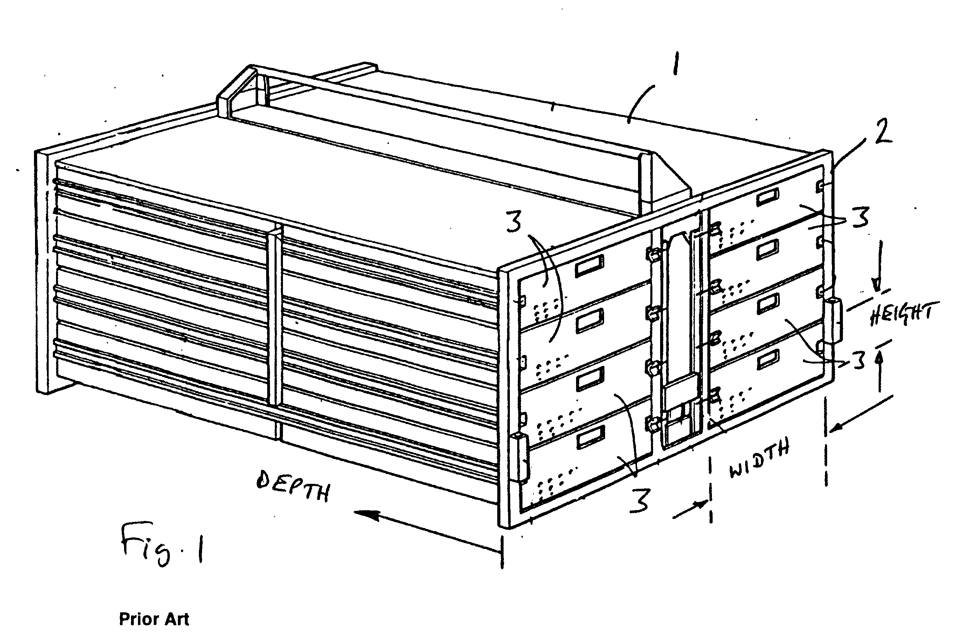

An improvement on this method is described in EP-A-19891 and EP-A-5755 in which the compartments are provided with slidable drawers or crates. Such a container 1 is shown schematically in Fig. 1 and includes a frame 2 and slidable drawers or crates 3. Instead of tipping the chickens out of the compartments, the individual drawers 3 are pushed out horizontally, for example onto a conveyor. This results in less disturbance to the chickens than with tipping them out. An alternative drawer design is shown in EP-A-108 613. For further understanding, the depth, width and height of crates or drawers 3 described with respect to the present invention are defined as in Fig. 1 with respect to manual removal of objects therein. Generally, the width is smaller than the depth. The objects in the crates or drawers 3 are removed by hand across the width thereof so that the width is limited to a size which can be conveniently reached by the average human arm without having to assume ergonomically tiring body postures.

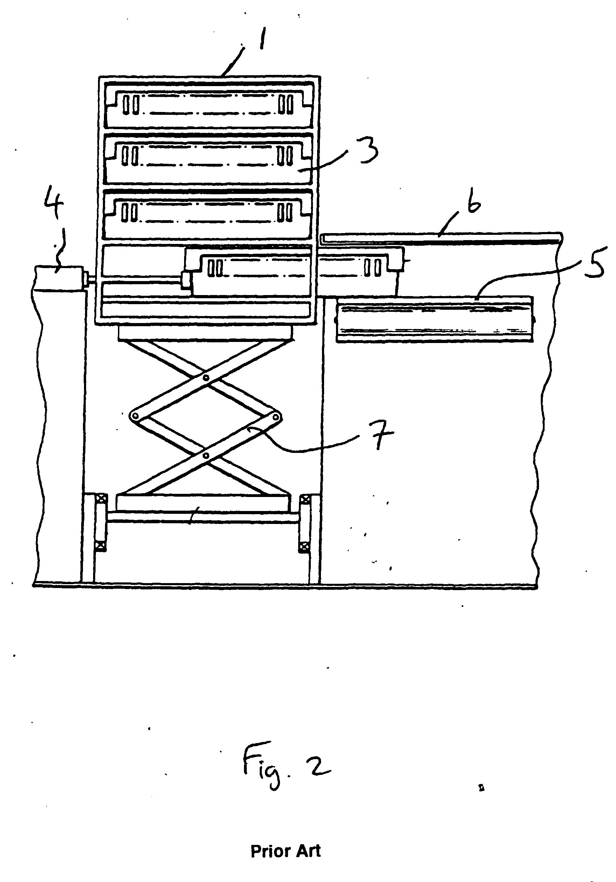

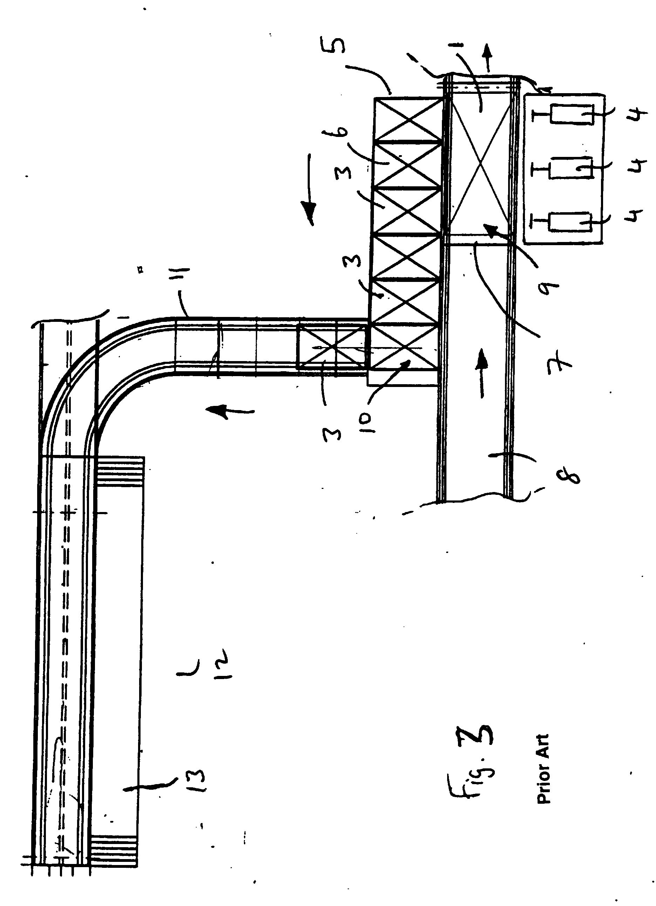

A further refinement is disclosed in EP-B-61 869 which will be described with reference to Fig. 2. A complete row of drawers or crates 3 are pushed out of the container 1 onto a conveyor 5 by rams 4. To prevent the live chickens from escaping out of the drawers 3 when on the conveyor 5, a roof 6 is provided as known in principle from US 3,718,118, US 3,916,835 or US 4,008,690. The bottom of each drawer in the container 1 serves as a roof for the drawer below. The top most drawer is covered by a plate which is part of the container 1. The lowest row of drawers 3 is pushed out first which requires the complete container 1 to be raised by an elevator 7 to the point at which the rams may eject the bottom row of drawers 3 onto the conveyor 5. After the bottom row has been pushed out, the elevator 7 is lowered until the next row of drawers 3 is in line with the conveyor 5 and the rams 4 after which this row is pushed out. Due to the fact that the width of the drawers is usually narrower than the depth, the drawers 3 must be turned through 90° on the conveyor 5 after ejection from container 1 so that the long side (the depth) is parallel with the conveyor movement. This typically results in an arrangement as shown in Fig. 3. The containers 1 are transported by a conveyor 8 to an unloading position 9. Here the containers are raised by the elevator 7 and the first row of drawers 3 is pushed out onto conveyor 5 which runs perpendicular to the movement direction of the rams 4 and parallel to conveyor 8 but in the reverse direction. At a point 10, the drawers 3 are transferred to a conveyor 11 which is turned through 90° with respect to conveyor 5 so that the drawers 3 now have their long side parallel to the conveyor direction. The drawers 3 are transported by conveyor 11 to a drawer unloading bay 12. Due to the fact that the lowest row of drawers is pushed out first, the conveyors 5 and 11 are at a relatively high level. This requires a raised stage or platform 13 on which the operatives stand to remove the chickens from the drawers 3 and hang them upside down on a further conveyor for slaughtering. An alternative method of removing one row of drawers is described in WO 94/27425 but this still requires a high level conveyor and also a 90° turn in the conveyor. In addition open top crates are not used.

These known methods and apparatuses have some disadvantages. Firstly, the number of drawers in one row is limited. The width of the drawer 3 is limited by the size of the human arm. Further, the size of the containers 1 in the horizontal plane is limited by the requirement to move the containers 1 by fork-lift truck as described in EP-A-61 869. If the containers 1 are too wide or deep they are very difficult to manoeuvre with a fork lift truck and may become unstable on the forks. Hence, the number of drawers which can be pushed out of one row onto one conveyor is very limited. Further, the containers 1 must be lifted up and down at the unloading point to allow each row to be pushed out. It takes time and energy to lift the heavy containers and to locate them rather precisely so that the drawers 3 slide exactly between the conveyor 5 and the fixed roof 6. These effects limit unloading capacity. Further, the known designs require inconvenient conveyor placings including a change in conveyor direction of 90° which takes up space and is unsuitable for retro-fitting the system in some existing plants. Finally, the elevated stage 13 is disliked by some operatives who feel insecure working in an elevated position without protection.

An additional problem which sometimes occurs is the lack of space for an adequate buffer. The conveyors 5 and 11 have a certain length and act as a buffer in case anything goes wrong with the unloading of the containers 1, e.g. a jammed drawer. While this problem is being sorted out the drawers on the conveyors 5 and 11 may be used up. As soon as the problem is rectified the container unloading mechanism can be operated at maximum speed to replenish the buffer. The known provision of a buffer of drawers one after each other on a horizontal conveyor requires long conveyors 5 and 11 if the buffer is to include a reasonable number of drawers. Sometimes the necessary space is not available.

It is an object of the present invention to provide a method and a system for unloading crates, particularly open-top crates holding objects such as livestock including poultry such as chickens, which overcomes the disadvantages of the known systems.

It is a further object of the present invention to provide a method and a system for unloading crates, particularly open-top crates holding objects such as livestock including poultry such as chickens, which has an improved capacity.

It is a further object of the present invention to provide a method and a system for unloading crates, particularly open-top crates holding objects such as livestock including poultry such as chickens, which allows the crates to be unloaded from an unloading platform which is at or near to ground level.

It is still another object of the present invention to provide a method and a system for unloading crates, particularly open-top crates holding objects such as livestock including poultry such as chickens, which has a large buffer which does not take up a lot of space.

### SUMMARY OF THE PRESENT INVENTION

The present invention may provide a system for unloading crates from a container, the container having separate compartments including a plurality of crates arranged in horizontal rows and vertical columns and slidably arranged within the container, comprising:
a transfer conveyor for receiving crates removed from the container and for transferring the crates to a processing area;
an ejector device for sliding the plurality of crates of one column out of the container at substantially the same time; and
a vertical unloader for receiving at least some of the plurality of the crates of one column and for sequentially depositing the crates onto the transfer conveyor.

The present invention may provide a method of unloading crates from a container, comprising:
providing a container having separate compartments including a plurality of crates arranged in horizontal rows and vertical columns and slidably arranged in the container;
ejecting the plurality of crates of one column out of the container at the same time;
receiving at least some of the plurality of the crates of one column in a vertical unloader; sequentially depositing the crates in the unloader onto a transfer conveyor.

The crates may be open-topped. The objects may be livestock such as poultry, in particular chickens. Between the container and the vertical unloader an intermediate conveyor may be provided which can act as a compact buffer. The lowest crates in the unloader are preferably deposited onto the transfer conveyor first followed by the rest.

The system in accordance with the present invention may have the advantage that the container does not have to raised and lowered at the crate ejection point. Further, the transfer conveyor may move either in the same direction as the direction of ejection or perpendicular to it, thus providing a flexible design adaptable the size and shape of the floor space available. Further, the number of crates in one column is usually higher than the number in a row so that the unloading capacity is increased. This increase may be augmented by the fact that repositioning of the container to access the next column does not require vertical movement of the container. The horizontal positioning movement of the container in accordance with the present invention is quicker and easier to perform.

The present invention may provide the further advantage that a plurality of horizontal conveyors may be placed between the ejector device and the vertical unloader to form a high capacity buffer requiring little space.

The independent claims describe further individual embodiments of the present invention.

The present invention will now be described with reference to the following drawings.

### BRIEF DESCRIPTION OF THE DRAWINGS

Fig. 1 is a schematic representation of a conventional container (prior art).

Fig. 2 is a schematic representation of a conventional container unloading device (prior art).

Fig. 3 is a schematic representation of a scheme for unloading chickens at a slaughterhouse using the conventional container unloading device of Fig. 2 (prior art).

Fig. 4 is a schematic side view representation of a container unloader in accordance with a first embodiment of the present invention.

Fig. 5 is a schematic front view representation of a container unloader in accordance with the first embodiment of the present invention.

Fig. 6 is a schematic top view representation of a container unloader in accordance with the first embodiment of the present invention.

Fig. 7 is a schematic side view representation of a container unloader in accordance with a second embodiment of the present invention.

Fig. 8 is a schematic side view representation of a container unloader in accordance with a third embodiment of the present invention.

Fig. 9 is a schematic side view representation of a container unloader in accordance with a fourth embodiment of the present invention.

Fig. 10 is a schematic top view representation of a container unloader in accordance with the fourth embodiment of the present invention.

Fig. 11 is a schematic side view representation of a container unloader in accordance with a fifth embodiment of the present invention.

Fig. 12 is a schematic top view representation of a container unloader in accordance with a fifth embodiment of the present invention.

Fig. 13 is a schematic top view representation of a container unloader in accordance with a sixth embodiment of the present invention.

Fig. 14 is a schematic side view representation of a container unloader in accordance with the sixth embodiment of the present invention.

### DESCRIPTION OF THE ILLUSTRATIVE EMBODIMENTS

The present invention will be described with reference to specific embodiments and certain drawings but the invention is not limited thereto but only by the claims. The present invention will also mainly be described with reference to the unloading of crates of chickens but the invention is not limited thereto. The present invention may find application in the unloading of crates of other objects such as fruit or vegetables.

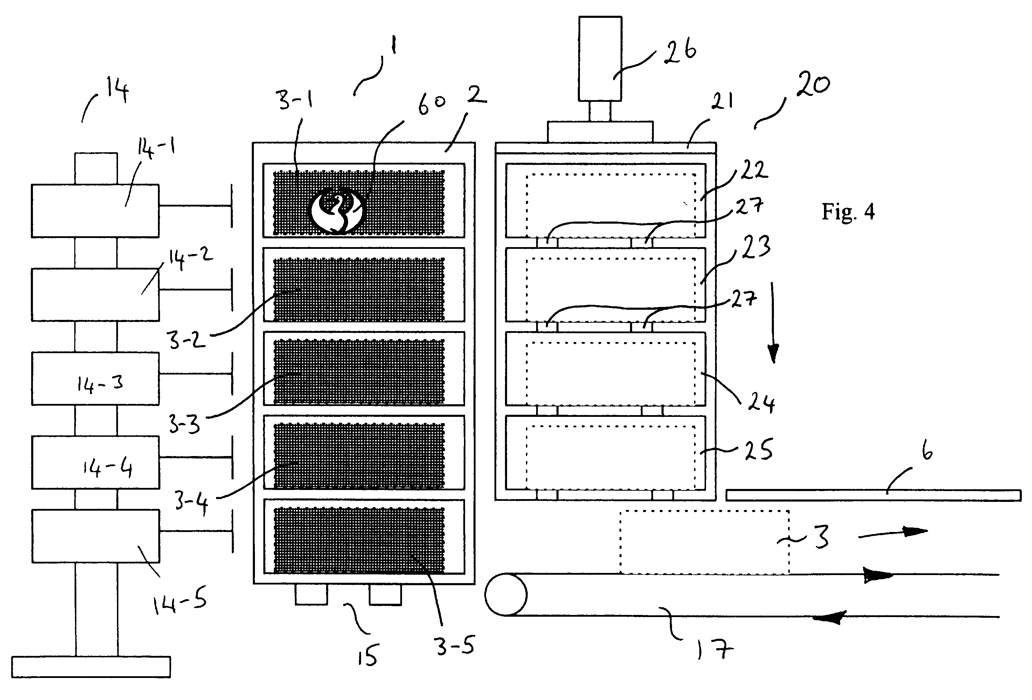

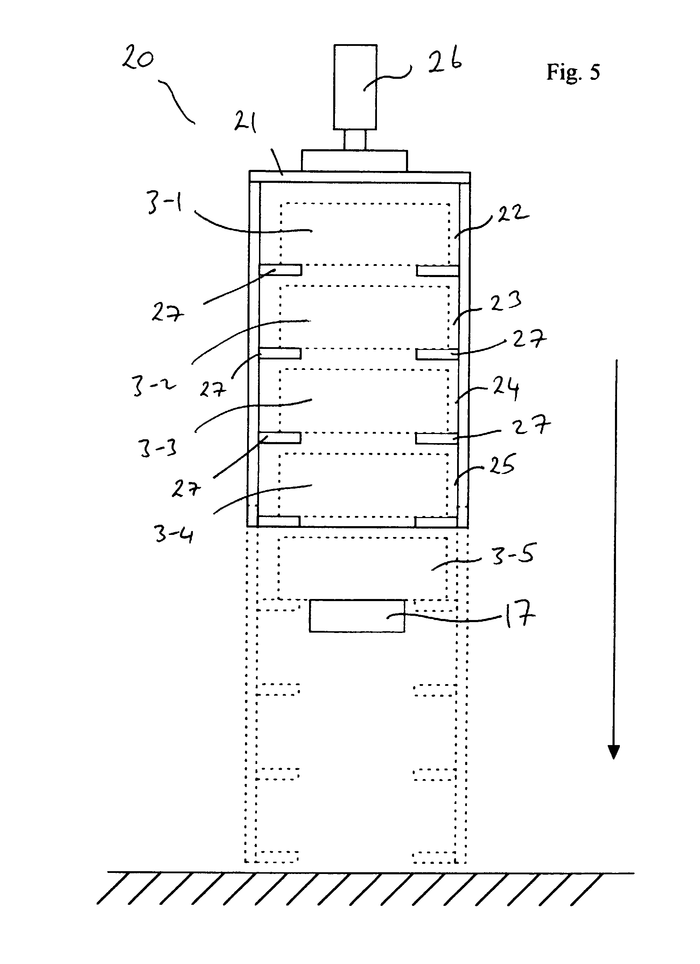

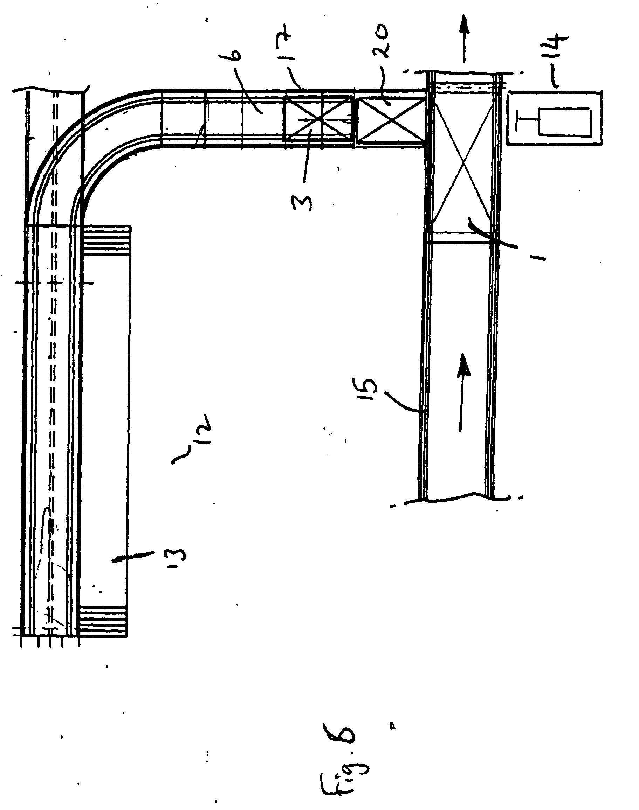

Fig. 4 is a schematic side view of a first embodiment of the present invention, Fig. 5 is a schematic cross-section facing towards the vertical unloader 20 and Fig. 6 is a schematic top view of the first embodiment. A conventional container 1 with a plurality of rows and columns of slidable crates 3 supported in a frame 2 is transported to the crate ejection point on a conveyor 15. The crates 3 are preferably made from a material which can be easily washed and kept clean, e.g. plastic, and preferably have perforated sides and base. The container 1 may comprise a row of three crates and a column of five crates but the invention is not limited thereto. The container 1 is stopped at a first position in which the crates 3-1 to 3-5 of a first column of the container 1 are aligned with a plurality of vertically arranged rams 14-1 to 14-5 which can extend in a direction perpendicular to the direction of travel of the conveyor 15. The rams 14-1 to 14-5 may be, for instance, conventional pneumatic or hydraulic rams. The bottom crate 3 of the first column is also aligned with a conveyor 17 which extends from a position adjacent the side of the container 1 in a direction parallel with the direction of movement of the ejector rams 14. When the lowest ram 14-5 extends the lowest crate 3-5 of the column is moved onto the conveyor 17 and is carried by the conveyor 17 in the direction of the crate unloading bay 12. The remaining rams 14-1 to 14-4 extend at substantially the same time and push the remaining crates 3-1 to 3-4 into receiving cradles 22 to 25 of a vertical unloader 20. Typically the crates 3 will be open top crates full of live chickens 60. The chickens 60 are prevented from leaving the lowest crate 3-5 of the column by the bottom of the next higher crate 3-4 as it passes under the unloader 20 and then by a roof 6 as it continues to towards the crate unloading bay 12 on the conveyor 17. The chickens 60 in the crates 3-4 to 3-2 are covered by the bottom of the next higher crate 3-3 to 3-1 when these crates are in the unloader 20. The top most crate 3-1 is covered by a plate 21 when in the unloader 20. When covered crates 3 are used or when the objects in the crates 3 are inanimate the precautions to prevent escape from the crates are unnecessary.

As soon as all the crates 3-1 to 3-5 have been transferred either to the conveyor 17 or the unloader 20, the container 1 is indexed forward by the conveyor 15 so that the next column of crates 3 is aligned with the rams 14 and the receiving cradles 22 to 25 of the unloader 20. During this time the cylinder 26 of the unloader 20 extends downwards dropping one of the crates 3-4 to 3-1 onto the conveyor 17 at a time until all of the crates 3-1 to 3-5 of the first column are on the conveyor 17 and moving in the direction of the crate unloading bay. The cylinder 26 retracts bringing the unloader cradles 22- 25 to their original position and the cycle for the next column can begin.

As can best be seen from Fig. 5 the unloader 20 includes an outer frame and cradles 22 - 25 within the frame. The frame is open at the bottom and at the front and back to allow the crates 3 to be slid into the unloader 20 and also to slide out when the crate is supported by the conveyor 17. Each cradle 22-25 includes a plurality of angled arms 27 for support of the crates 3-1 to 3-4 in the unloader while leaving the bottom central part of each crate free so that when the relevant crate contacts the upper surface of conveyor 17 it is removed from the unloader 20 and the unloader 20 may lower the next crate onto the conveyor 17. The arms 27 are designed so that they pass over the conveyor 17 without interfering therewith. The width of the conveyor 17 is designed to be less than the width of the crates 3 and the distance between the arms 27.

Once all the crates are removed from a container 1 this is moved away on conveyor 15 for washing, filling with empty crates and transport back to the farms.

The above embodiment has the following advantages. Usually, crates are wider and deeper than they are tall as this gives them lateral stability. Hence, there is usually more crates in a column than in a row. For instance the ratio may be 5 to 3. Accordingly the ejector system 14 of the present invention pushes out more crates 3 at one time than conventional row systems. Secondly, the unloader 20 saves time by depositing the crates on the conveyor 17 at the same time as the container 1 is being indexed to the next column position. Further, in accordance with the present invention there is no need to lift or move the container 1 vertically, neither before nor during the ejection operation which saves time thus increasing throughput as well as reducing energy used. Finally, the height of the conveyor 17 is relatively low, typically N-2 x the height of one crate where N is the number of crates in one column of the container 1. For example with a commercially available chicken container five crates in a column, the conveyor 17 is about 800 mm above the ground for a system as described in this embodiment. This allows an optimum working height for the operatives at the crate unloading station 12 of about 1000 mm without using an elevated stage.

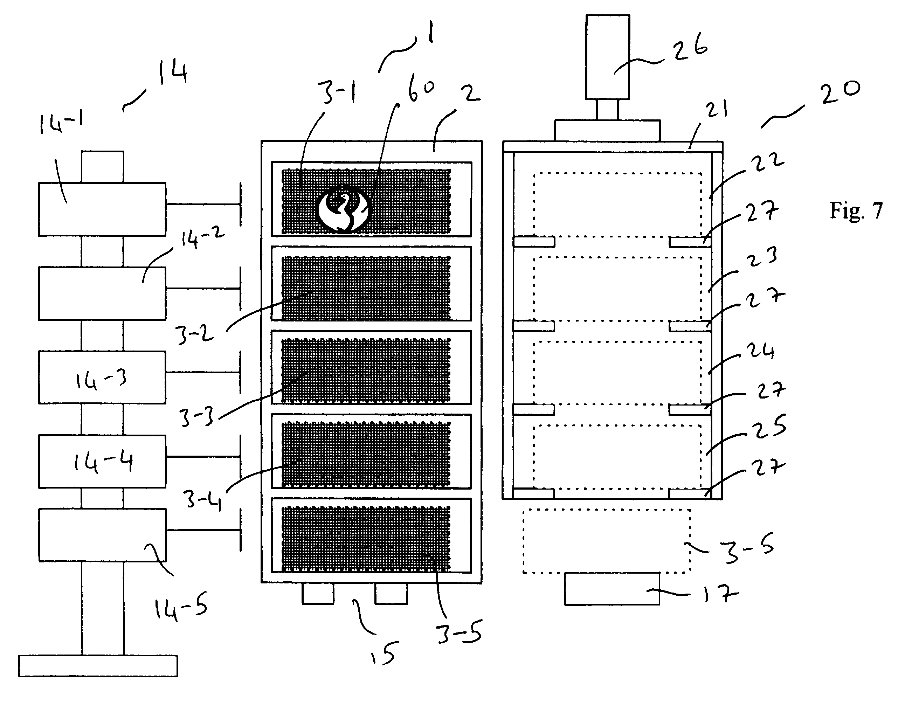

Fig. 7 is a schematic side view of a second embodiment of the present invention. In this embodiment all components are the same as the first embodiment except the movement direction of conveyor 17 is perpendicular to the direction of crate ejection. In this embodiment it is preferred if the conveyor 17 is stopped while the lowest crate 3-5 is ejected from the container 1 onto it and the remaining crates 3-1 to 3-4 are ejected from the container 1 into the unloader 20. Then conveyor 17 is indexed forward to move crate 3-5 out of the way and stopped again while crate 3-4 is lowered onto it by unloader 20 and then indexed forward ready for the lowering of crate 3-3, etc. The capacity of this embodiment is somewhat lower than for the first embodiment.

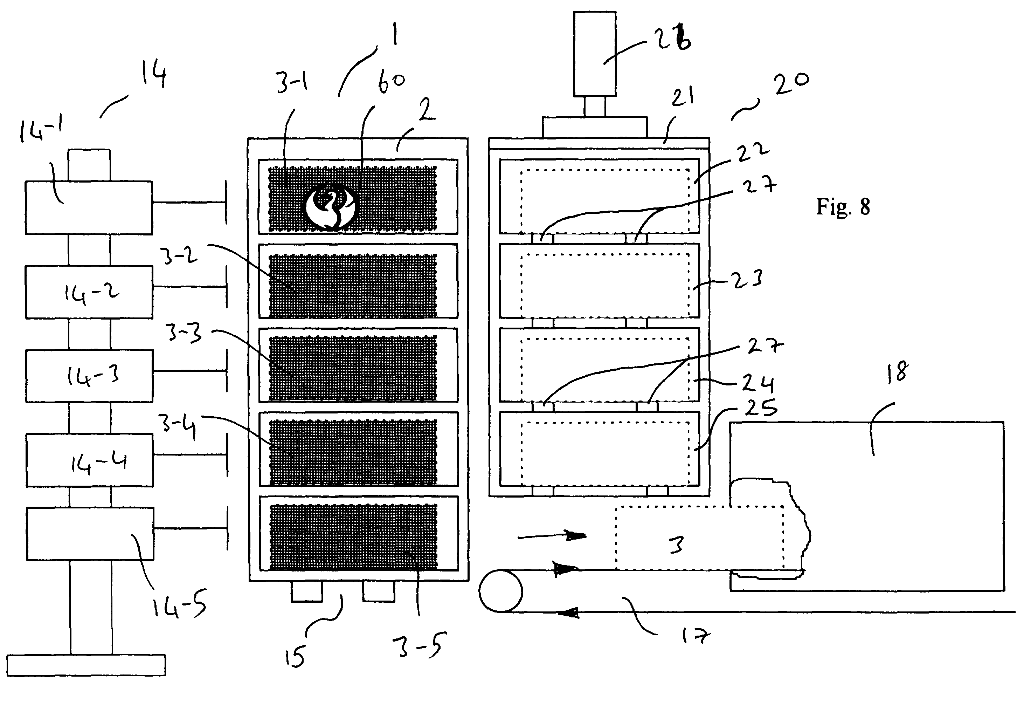

Fig. 8 is a schematic side view of a third embodiment of the present invention in which all components are the same except for the tunnel 18 which surrounds the top and sides of the crates 3 on conveyor 17 and does not prevent chickens from leaving one crate and entering the next. This design of tunnel 18 may be used as a replacement for the roof 6 with either the first or second embodiment or with any other embodiment of the present invention which uses a roof. It is preferable if tunnel 18 completely surrounds the top and sides of the conveyor 17 in a light restricting way so that the chickens are kept in darkness along the length of the conveyor 17. This keeps the chickens quiet but allows each chicken some freedom to move from one crate to the next or onto the conveyor 17. This is preferable compared with roof 6 of the first two embodiments which is so low that the heads of the chickens are scraped along the underside of the roof 6 for the total length of the conveyor 17. A suitable calming light may be located within the tunnel 18 such as blue light and air conditioning may be provided to bring the chickens into optimum conditions before slaughter.

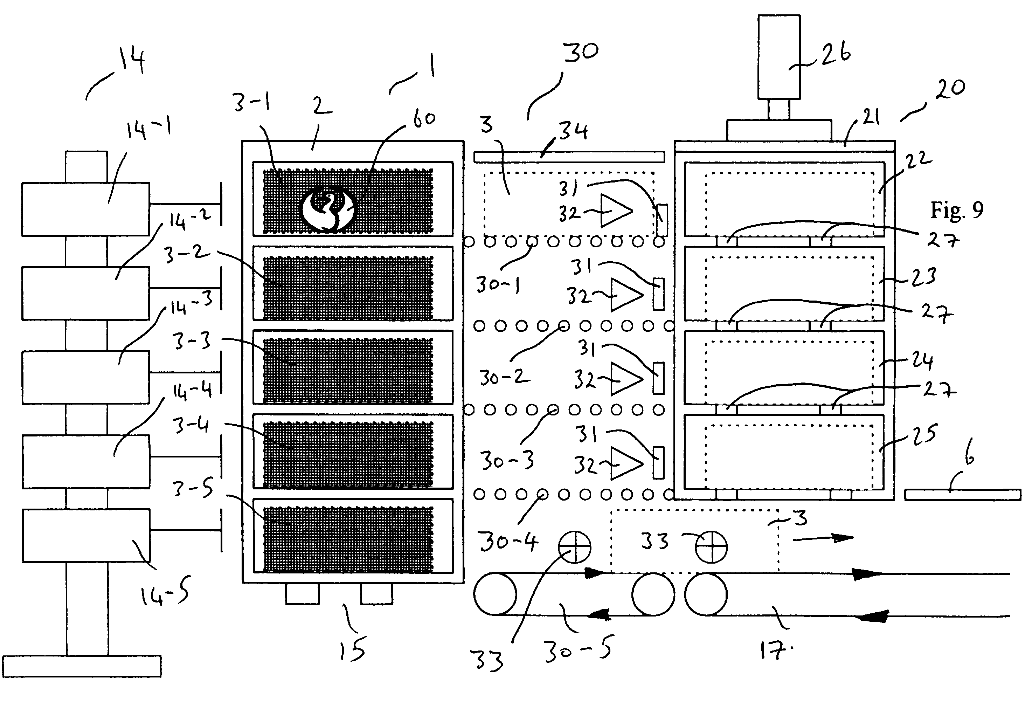

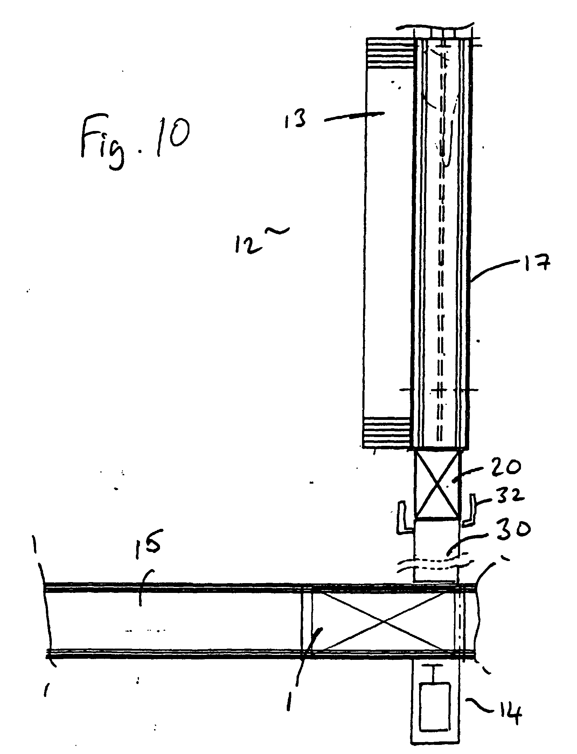

Fig. 9 is a schematic side view, and Fig. 10 a schematic top view of a fourth embodiment of the present invention in which a section of conveyor 30 is placed between the vertical unloader 20 and the crate ejector system 14. In the first to third embodiments, the unloader 20 received the crates 3-1 to 3-4 directly from the ejector 14. In the fourth embodiment the unloader 20 receives the crates 3-1 to 3-4 via the conveyor 30.

Intermediate conveyor 30 may be a series of passive conveyors 30-1 to 30-4, e.g. rollers or a low friction surface such as PTFE, spaced apart vertically and a driven conveyor 30-5, conveyor 30-5 being at the lowest position. The conveyors 30-1 to 30-5 are aligned with the crates in containers 1 when the container 1 is in the crate ejection position and also conveyors 30-1 to 30-4 are aligned with the cradles 22 to 25 of the unloader 20. The crates 3 are moved along the conveyors 30-1 to 30-4 by being pushed by the crate behind. Alternatively, if space allows, the crates 3 on conveyors 30-1 to 30-4 may be moved forwards by pushers which come in from the sides (there is usually not enough space between rows of crates in a container 1 that a normal driven conveyor can be used) and move the crates towards the unloader 20. The top crates 3-1 on conveyor 30-1 are covered by a roof 34 whereas the crates 3-2 to 3-5 on conveyors 30-2 to 30-5 are covered by the conveyor above. At the end of each intermediate conveyor 30-1 to 30-4 is a stop 31 for holding the crate in this final position before it is moved onto the unloader 20 by a grabber 32 which operates on the side of the crate and moves it into the unloader 41. An optical eye light barrier system 33 determines if a crate 3-5 is travelling on the conveyor 30-5 or is located underneath crate 3-4 on conveyor 17. If not, the crate 3-4 may be unloaded onto conveyor 17 by lowering the unloader 20. This procedure is repeated for the other crates 30-1 to 30-3. Optionally, conveyor 30-5 may be stopped while the crates in the unloader 20 are unloaded onto conveyor 17. Conveyor 17 is shown moving parallel to intermediate conveyor 30-1 to 30-5 but conveyor 17 may also be a 90° to this conveyor as has been described with respect to the second embodiment.

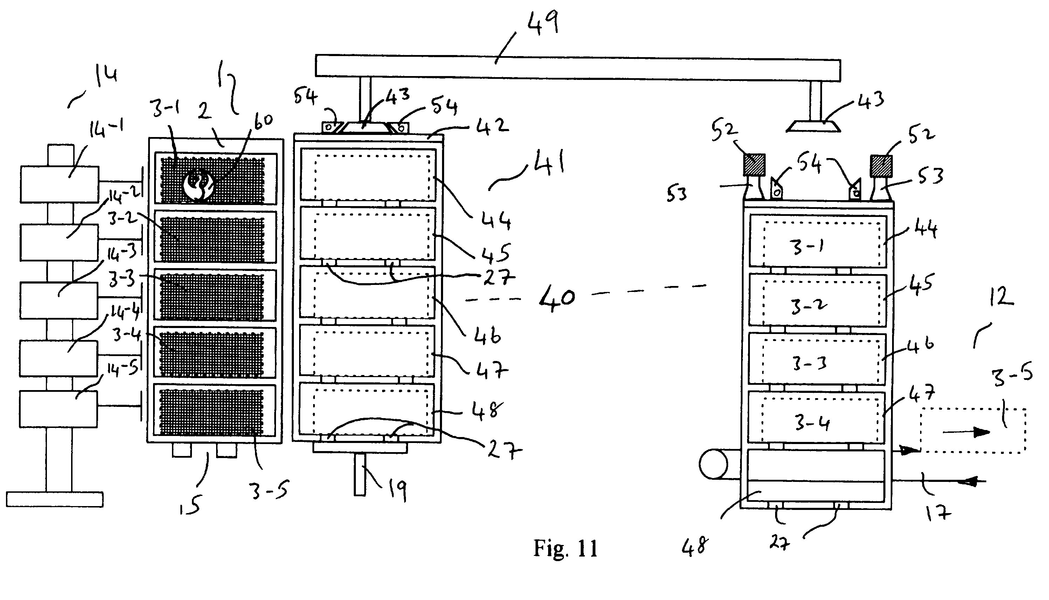

The advantage of the fourth embodiment is that a large buffer is created by the crates on conveyors 30-1 to 30-5 within a short distance. If there are five crates in each column, 10 meters of conveyor 30 provides the equivalent of 50 meters of conventional conveyor. As best shown in Fig. 11, this embodiment may be used when the space available is small. The crate unloading area 12 may be placed immediately after the start of conveyor 17 thus providing a compact installation while maintaining the advantage of a large buffer in case of problems at the crate ejector 14.

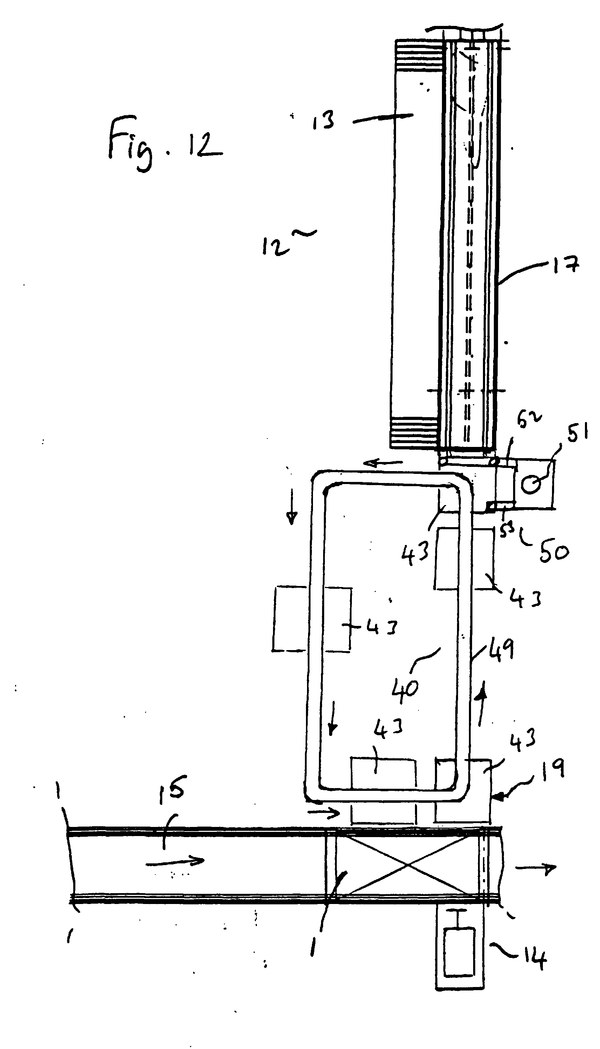

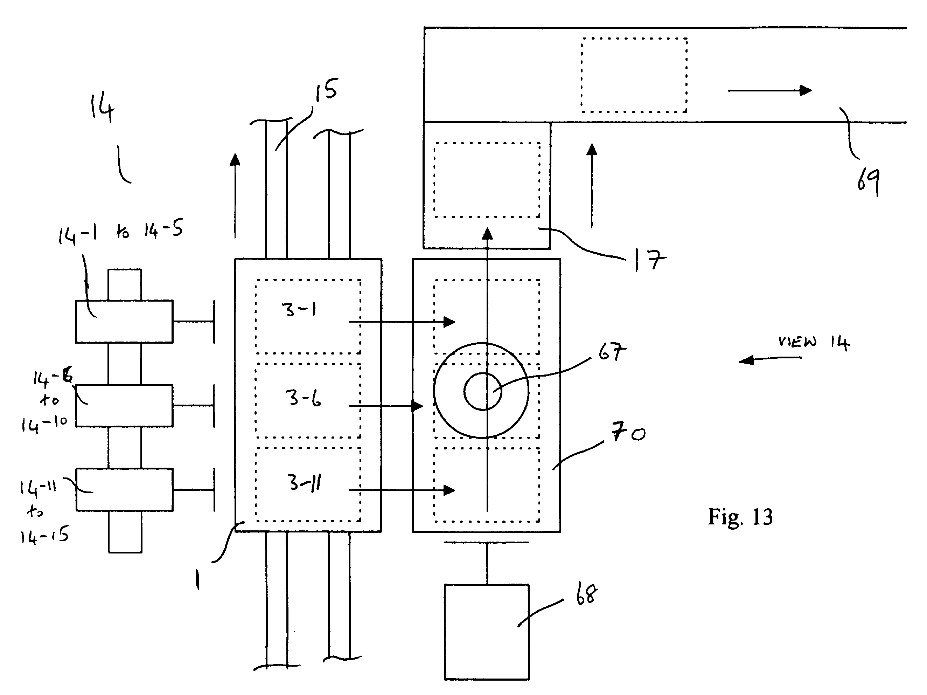

Fig. 12 is a schematic side view, and Fig. 13 a schematic top view of a fifth embodiment of the present invention in which an alternative intermediate conveyor is provided by transport means 40 which is used to transport the crates from the point of where the crates 3 leave the container 1 to the point at which the crates 3 are deposited on the conveyor 17. Preferably, transport means 40 includes cradles 44 to 48 located in a magazine 41, the magazine 41 being disconnectably fixed to a gondola plate 43 suspended from an overhead rail 49 by a clamping device 54. Each magazine 41 preferably has an outer frame for holding the cradles 44 to 48 and each cradle 44 to 48 includes angled arms 27 for supporting a crate 3 similar to the angle arms 27 shown in, and described with respect to Fig. 5. When a magazine 41 is docked and held at the crate ejector point by means of a clamp 19, e.g. a magnetic or suction clamp, the crates 3-1 to 3-5 in one column of the container 1 are aligned with the cradles 44 to 48. The ejector rams 14-1 to 14-5 push out the crates 3-1 to 3-5 into the cradles 44 to 48. In the magazine 41 the top of each crate 3-2 to 3-5 is covered by the bottom of the crate above to prevent chickens escaping. The crate 3-1 is covered by a plate 42 which is part of the magazine 41. Once all the crates are loaded, the clamp 19 is released and the gondola plate 43 with its magazine 41 is moved along the overhead track 49 to the crate removal point 50. Here the magazine 41 is attached to a lifting and lowering device 51 via arms 52 and suitable clamps 53, e.g. suction or magnetic clamps, to form a vertical unloader in accordance with the present invention. The gondola plate 43 is disconnected from the magazine 41 by releasing the clamping means 54. The magazine 41 is lowered one crate at a time by the lowering means 51, e.g. by a hydraulic or pneumatic cylinder or similar, so that each of the crates 3-1 to 3-5 is dropped onto the conveyor 17 in turn and transported towards the crate unloading area 12. Once empty, the magazine 41 is raised by the lifting means 51 and re-attached to the gondola plate 43 by means of the clamp 54 and it continues along the closed loop overhead rail 49 until it arrives at the crate ejector point again. By providing a plurality of gondolas plates 43 and magazines 41 the process of removal of crates is continuous and the full magazines 41 provide a short buffer with high capacity between the crate ejection point and the unloading bay 12.

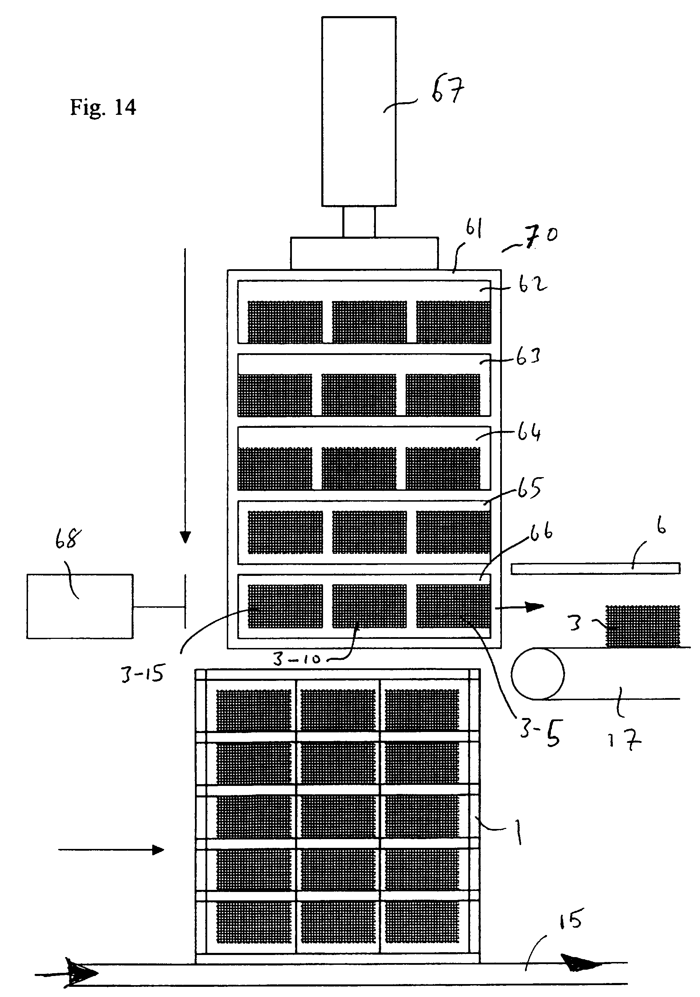

Fig. 13 is a schematic top view and Fig. 14 is a schematic side view of an unloader in accordance with a sixth embodiment of the present invention. In this embodiment all the crates 3-1 to 3-15 in one container 1 are ejected by a plurality of ejector devices 14-1 to 14-15 into an unloader 70. For this purpose the unloader 70 is provided with a plurality of compartments 62 to 66 and a top plate 61 to cover the top row of crates 3 when these are open topped. The crates 3 may be slid in and out of compartments 62-66. Container 1 may be brought to the ejection site by a conveyor 15 but this is optional. Due to the time taken to unload all the crates 3 of one container 1 from unloader 70 there may be sufficient time for a fork lift truck to take away the empty container 1 for washing and to fetch a new container 1. Once the crates 3 are in the unloader 70 they are pushed out row by row by a ram 68 and deposited on a conveyor 17. When the crates 3 contain inanimate objects or are have closed tops the depositing of the crates on the conveyor 17 may be started from the top most row of the unloader 70. However, if the crates contain livestock such as chickens and the crates are open topped it is preferably to start unloading the unloader 70 from the bottom most row. This requires lifting the unloader 70 with a suitable lifting device such as a pneumatic or hydraulic ram 67 so that the lowest row of crates 3-5, 3-10 and 3-15 is aligned with the conveyor 17. The ram 68 is then activated to push the crates 3 onto the conveyor 17. Due to the shape of the crates 3 it is preferable to turn them through 90° using a second conveyor 69. Once the bottom row is on the conveyor 17 the vertical unloader 70 lowers by one row and this is then ejected and this procedure repeated. In the mean time a second container 1 may be brought into the ejector position as shown schematically in Fig. 14.

This embodiment has the advantage that the unloader 70 may provide a compact pre-buffer in case problems occur with the next containers. Further, the conveyor 15 may be dispensed with. One disadvantage for depositing livestock onto the transfer conveyor 17 is that this must be a high level conveyor.

While the invention has been shown and described with reference to preferred embodiments, it will be understood by those skilled in the art that various changes or modifications in form and detail may be made without departing from the scope of this invention as defined in the attached claims. For example, in the above reference has been made to hydraulic or pneumatic cylinders for the ejector system 14 and 68 but the present invention is not limited thereto. The ejector system 14, 68 may include any suitable ejector arrangement, e.g. rams driven by a linear motor, a screw thread or may be a robot. Further, the hydraulic or pneumatic cylinder 26 of the unloader 20 or of the lowering device 51 or the cylinder 69 of unloader 70 may be replaced by chains, cables and pulleys or any other suitable lowering and lifting device as is known, for example, from the design of lifts or alternatively may be a robot.

## Claims

1. A system for unloading crates (3) from a container (1), the container having separate compartments including a plurality of crates (3) arranged in horizontal rows and vertical columns and slidably arranged within the container (1), comprising:
a transfer conveyor (17) for receiving crates (3) removed from the container and for transferring the crates (3) to a processing area;
an ejector device (14) for sliding out the plurality of crates (3-1 - 3-5) in at least one column of the container at the same time; and
a vertical unloader (20) for receiving at least some of the plurality of the crates (3) of one column and for sequentially depositing the crates (3) onto the transfer conveyor (17).

2. A system according to claim 1, wherein the vertical unloader (20) is adapted to lower the crates (3) one-by-one onto the transfer conveyor (17).

3. A system according to claim 1 or 2, wherein said crates (3) are open topped.

4. A system according to any of claims 1 to 3, wherein the vertical unloader (20) includes a plurality of cradles (22-25), each cradle (22-25) being adapted to receive one crate (3).

5. A system according to claim 4, wherein the unloader (20) has an outer frame and each cradle (22-25) includes at least two arms (27) which extend from the outer frame towards the centre of the unloader.

6. A system according to any previous claim, wherein the transfer conveyor (17) moves in the same direction as the ejection direction of the ejector device (14).

7. A system according to any previous claim, further comprising a further conveying device between the point at which the crates (3) are ejected from the container (1) to the point at which they are received by the vertical unloader (20).

8. A system according to any of the previous claims, wherein the ejector device (14) is adapted to eject the lowest crate (3-5) of a column of the container (1) directly onto the transfer conveyor (17) and the remaining crates (3-1 - 3-4) of the column are ejected into the unloader (20).

9. A method of unloading crates (3) from a container (1), comprising:
providing a container (1) having separate compartments including a plurality of crates (3) arranged in horizontal rows and vertical columns and slidably arranged in the container (1);
ejecting the plurality of crates (3) of at least one column from the container (1) at the same time;
receiving at least some of the plurality of the crates (3) of one column in a vertical unloader (20); and
sequentially depositing the crates (3) in the unloader (20) onto a transfer conveyor (17).

10. A method according to claim 9, wherein the depositing step includes lowering the crates (3) one-by-one onto the transfer conveyor (17).

11. A method according to claim 9 or 10, further comprising the step of maintaining a plurality of crates (3) in a buffer (30) between the ejecting and receiving steps.

12. A method according to any of claims 9 to 11, wherein the lowest crate (3-5) in the column of the container (1) is ejected directly onto the transfer conveyor (17) and the remaining crates (3-1 - 3-4) of the column are ejected into the unloader (20).

13. A method or a system in accordance with any of the previous claims, wherein the crates (3) contain poultry (60).

## Patentansprüche

1. System zum Entladen von Kästen (3) aus einem Behälter (1), wobei der Behälter getrennte Fächer aufweist, die eine Vielzahl von in wagerechten Reihen und senkrechten Spalten angeordneten Kästen (3) enthalten, die in dem Behälter (1) verschiebbar angeordnet sind, wobei das System umfaßt:
eine Umladefördereinrichtung (17) zum Aufnehmen von aus dem Behälter entfernten Kästen (3) und zum Umladen der Kästen (3) in einen Verarbeitungsbereich;
eine Ausstoßvorrichtung (14) zum gleichzeitigen Herausschieben der vielzahl von Kästen (3-1 - 3-5) in mindestens einer Spalte des Behälters; und
eine Vertikalentladevorrichtung (20) zum Aufnehmen mindestens einiger der Vielzahl von Kästen (3) einer Spalte und zum sequentiell Ablegen der Kästen (3) auf die Übertragungsfördereinrichtung (17).

2. System nach Anspruch 1, in dem die Vertikalentladevorrichtung (20) zum Absenken der Kästen (3) einen nach dem anderen auf die Umladefördereinrichtung (17) ausgebildet ist.

3. System nach Anspruch 1 oder 2, in dem die Kästen (3) oben offen sind.

4. System nach einem der Ansprüche 1 bis 3, in dem die Vertikalentladevorrichtung (20) eine Vielzahl von Gestellen (22 - 25) enthält, die jeweils zum Aufnehmen eines Kastens (3) ausgebildet sind.

5. System nach Anspruch 4, in dem die Entladevorrichtung (20) einen Außenrahmen aufweist und jedes Gestell (22 - 25) mindestens zwei Arme (27) enthält, die sich von dem Außenrahmen zur Mitte der Entladevorrichtung erstrecken.

6. System nach einem der vorhergehenden Ansprüche, in dem sich die Umladefördereinrichtung (17) in die gleiche Richtung, wie die Ausstoßrichtung der Ausstoßvorrichtung (14), bewegt.

7. System nach einem der vorhergehenden Ansprüche, das weiterhin eine weitere Fördervorrichtung zwischen der Stelle, an der die Kästen (3) aus dem Behälter (1) ausgestoßen werden, und der Stelle, an der sie von der Vertikalentladevorrichtung (20) aufgenommen werden, umfaßt.

8. System nach einem der vorhergehenden Ansprüche, in dem die Ausstoßvorrichtung (14) derart ausgebildet ist, daß sie den untersten Kasten (3-5) einer Spalte des Behälters (1) unmittelbar auf die Umladefördereinrichtung (17) ausstößt, und die verbleibenden Kästen (3-1 - 3-4) der Spalte in die Entladevorrichtung (20) ausgestoßen werden.

9. Verfahren zum Entladen von Kästen (3) aus einem Behälter (1), umfassend:
Bereitstellen eines Behälters (1) mit getrennten Fächern, die eine Vielzahl von in wagerechten Reihen und senkrechten Spalten angeordneten Kästen (3) enthalten, welche in dem Behälter (1) verschiebbar angeordnet sind,
gleichzeitig Ausstoßen der Vielzahl von Kästen (3) mindestens einer Spalte aus dem Behälter (1);
Aufnehmen von mindestens einigen der Vielzahl der Kästen (3) einer Spalte in einer Vertikalentladevorrichtung (20); und
Sequentielles Ablegen der Kästen (3) in der Entladevorrichtung (20) auf eine Überführungsfördereinrichtung (17).

10. Verfahren nach Anspruch 9, bei dem der Ablegeschritt ein Absenken der Kästen (3) einem nach dem anderen auf die Umladefördereinrichtung (17) beinhaltet.

11. Verfahren nach Anspruch 9 oder 10, das weitherhin den Schritt aufweist, daß zwischen dem Ausstoß- und dem Aufnahmeschritt eine Vielzahl von Kästen (3) in einem Puffer (30) gehalten wird.

12. Verfahren nach einem der Ansprüche 9 bis 11, bei dem der unterste Kasten (3-5) in der Spalte des Behälters (1) unmittelbar auf die Umladefördereinrichtung (17) ausgestoßen wird und die verbleibenden Kästen (3-1 - 3-4) der Spalte in die Entladevorrichtung (20) ausgestoßen werden.

13. Verfahren oder System nach einem der vorhergehenden Ansprüche, bei dem die Kästen (3) Geflügel (60) enthalten.

## Revendications

1. Système pour décharger des caisses (3) d'un conteneur (1), le conteneur ayant des compartiments séparés contenant une pluralité de caisses (3) disposées en rangées horizontales et en colonnes verticales et disposées de façon coulissante dans le conteneur (1), comprenant:
un convoyeur de transfert (17) destiné à recevoir des caisses (3) extraites du conteneur et à transférer les caisses (3) à une zone de traitement;
un dispositif éjecteur (14) destiné à extraire par coulissement la pluralité de caisses (3-1 - 3-5) d'au moins une colonne du conteneur en même temps; et
un déchargeur vertical (20) destiné à recevoir au moins certaines de la pluralité des caisses (3) d'une colonne et à déposer séquentiellement les caisses (3) sur le convoyeur de transfert (17).

2. Système selon la revendication 1, dans lequel le déchargeur vertical (20) est prévu pour abaisser les caisses (3) l'une après l'autre sur le convoyeur de transfert (17).

3. Système selon la revendication 1 ou 2, dans lequel lesdites caisses (3) sont ouvertes sur le dessus.

4. Système selon l'une quelconque des revendications 1 à 3, dans lequel le déchargeur vertical (20) contient une pluralité de berceaux (22-25), chaque berceau (22-25) étant prévu pour recevoir une caisse (3) .

5. Système selon la revendication 4, dans lequel le déchargeur (20) a un cadre extérieur et chaque berceau (22-25) contient au moins deux bras (27) qui s'étendent depuis le cadre extérieur vers le centre du déchargeur.

6. Système selon l'une quelconque des revendications précédentes, dans lequel le convoyeur de transfert (17) se déplace dans la même direction que la direction d'éjection du dispositif éjecteur (14).

7. Système selon l'une quelconque des revendications précédentes, comprenant en outre un convoyeur supplémentaire entre le point au niveau duquel les caisses (3) sont éjectées du conteneur (1) et le point au niveau duquel elles sont reçues par le déchargeur vertical (20).

8. Système selon l'une quelconque des revendications précédentes, dans lequel le dispositif éjecteur (14) est prévu pour éjecter la caisse la plus basse (3-5) d'une colonne du conteneur (1) directement sur le convoyeur de transfert (17) et les caisses restantes (3-1 - 3-4) de la colonne sont éjectées dans le déchargeur (20).

9. Procédé de déchargement de caisses (3) d'un conteneur (1), comprenant les étapes consistant à:
fournir un conteneur (1) ayant des compartiments séparés contenant une pluralité de caisses (3) disposées en rangées horizontales et en colonnes verticales et disposées de façon coulissante dans le conteneur (1);
éjecter en même temps la pluralité de caisses (3) d'au moins une colonne du conteneur (1);
recevoir au moins certaines de la pluralité des caisses (3) d'une colonne dans un déchargeur vertical (20); et
déposer séquentiellement les caisses (3) dans le déchargeur (20) sur un convoyeur de transfert (17).

10. Procédé selon la revendication 9, dans lequel l'étape consistant à déposer les caisses comporte l'abaissement des caisses (3) l'une après l'autre sur le convoyeur de transfert (17).

11. Procédé selon la revendication 9 ou 10, comprenant en outre l'étape consistant à maintenir une pluralité de caisses (3) dans une zone tampon (30) entre les étapes d'éjection et de réception.

12. Procédé selon l'une quelconque des revendications 9 à 11, dans lequel la caisse la plus basse (3-5) dans la colonne du conteneur (1) est éjectée directement sur le convoyeur de transfert (17) et les caisses restantes (3-1 - 3-4) de la colonne sont éjectées dans le déchargeur (20).

13. Procédé ou système selon l'une quelconque des revendications précédentes, dans lequel les caisses (3) contiennent de la volaille (60).
